# EUROPEAN PATENT APPLICATION

(11) **EP 4 701 033 A1**
(43) Date of publication of application: **25.02.2026**
(21) Application number: 25194582.0
(22) Date of filing: 07.08.2025
(51) Int. Cl.: H02J 7/00

(54) **EXTERNAL BATTERY AND METHOD OF CHARGING THE SAME**

(30) Priority: 08.08.2024 KR 20240106429
(71) Applicant: SAMSUNG SDI CO., LTD., Yongin-si, Gyeonggi-do 17084 (KR)
(72) Inventor: OH, Seotaek, 17084 Yongin-si, Gyeonggi-do (KR)
(74) Representative: Gulde & Partner

(57) **Abstract**

An external battery, includes a battery cell, a charging unit configured to generate a charging current with an external power supplied from a charger to an input terminal thereof and to transfer the charging current to the battery, a detector configured to sense a voltage state of the input terminal and determine a current value of the charging current supplied to the battery cell, based on the voltage state, and a main controller unit, MCU, configured to control charging of the battery cell by the charging current, calculate an estimated full charging time for fully charging the battery cell, based on a current value of the charging current, and calculate a charging time while the charging current is flowing.

## Description

### CROSS-REFERENCE TO RELATED APPLICATIONS

This application claims the benefit of the Korean Patent Application No. 10-2024-0106429 filed on August 8, 2024, which is hereby incorporated by reference as if fully set forth herein.

### BACKGROUND

### 1. Field

Embodiments relate to an external battery and a method of charging the same.

### 2. Description of the Related Art

Unlike primary batteries that are not designed to be charged, secondary batteries are designed to be discharged and recharged. Low-capacity secondary batteries are used in small portable electronic devices, such as smart phones, feature phones, notebook computers, digital cameras, and camcorders, while large-capacity secondary batteries are widely used as power sources for driving motors, such as of hybrid vehicles or electric vehicles, and for power storage. The secondary battery includes an electrode assembly comprising a positive electrode and a negative electrode, a case that accommodates the electrode assembly, a terminal part connected to the electrode assembly, etc.

The above information disclosed in this Background section is for enhancement of understanding of the background of the present disclosure, and therefore, it may contain information that does not constitute related (or prior) art.

### SUMMARY

Embodiments include an external battery, including a battery cell, a charging unit configured to generate a charging current with an external power supplied from a charger to an input terminal thereof and to transfer the charging current to the battery cell, a detector configured to sense a voltage state of the input terminal and determine a current value of the charging current supplied to the battery cell, based on the voltage state, and a main controller unit (MCU) configured to control charging of the battery cell by the charging current, calculate an estimated full charging time for fully charging the battery cell, based on a current value of the charging current, and calculate a charging time while the charging current is flowing.

The external battery may further include an alarm unit configured to alarm a user when the charging time is longer than the estimated full charging time.

The alarm unit may include a display unit configured to display an alarm message when the charging time is longer than the estimated full charging time.

The alarm unit may include a speaker configured to output an alarm sound when the charging time is longer than the estimated full charging time.

When the charging time is longer than the estimated full charging time, the MCU may cut off the charging current.

When the voltage state of the input terminal is an open state, the detector may determine the current value of the charging current to be 500 mA.

When the voltage state of the input terminal is a short circuit state, the detector may determine the current value of the charging current to be 1 A.

When the voltage state of the input terminal is a pull-up state, the detector may determine the current value of the charging current to be 2 A.

The MCU may include a counter configured to generate a clock pulse, and the MCU may calculate the charging time by counting clock pulses generated when the charging current is flowing.

The detector may sense a voltage state between a D+ terminal and a D- terminal of a universal serial bus (USB) cable connected to the input terminal.

Embodiments include a method of charging an external battery, the method including sensing a voltage state of an input terminal of an external battery, determining a current value of a charging current supplied to a battery cell embedded in the external battery cell, based on the voltage state, controlling the battery cell to be charged by the charging current, calculating an estimated full charging time for fully charging the battery cell, based on a current value of the charging current, and calculating a charging time while the charging current is flowing.

The method may further include alarming a user when the charging time is longer than the estimated full charging time.

The alarming may include displaying an alarm message through a display unit when the charging time is longer than the estimated full charging time.

The alarming may include outputting an alarm sound through a speaker when the charging time is longer than the estimated full charging time.

The method may further include cutting off the charging current when the charging time is longer than the estimated full charging time.

The determining the current value of the charging current may include determining the current value of the charging current to be 500 mA when the voltage state of the input terminal is an open state.

The determining the current value of the charging current may include determining the current value of the charging current to be 1 A when the voltage state of the input terminal is a short circuit state.

The determining the current value of the charging current may include determining the current value of the charging current to be 2 A when the voltage state of the input terminal is a pull-up state.

Calculating the charging time may include calculating the charging time by counting clock pulses generated when the charging current is flowing, using a counter generating a clock pulse.

Sensing the voltage state may include sensing a voltage state between a D+ terminal and a D- terminal of a universal serial bus (USB) cable connected to the input terminal.

### BRIEF DESCRIPTION OF THE DRAWINGS

Features will become apparent to those of ordinary skill in the art by describing in detail exemplary embodiments with reference to the attached drawings, in which:
FIG. 1 is a block diagram of an external battery according to one or more embodiments of the present disclosure;
FIG. 2 is a graph showing a volage variation and a current variation when charging is controlled by an external battery according to one or more embodiments of the present disclosure; and
FIG. 3 is a flowchart for describing a method of charging an external battery, according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Prior to the description, it is noted that the terms or words used in this specification and claims should not be construed as being limited to common or dictionary meanings but instead should be understood to have meanings and concepts in agreement with the spirit of the present disclosure based on the principle that an inventor can define the concept of each term suitably in order to describe his/her own disclosure in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

Hereinafter, the present disclosure will be described in detail with reference to the accompanying drawings.

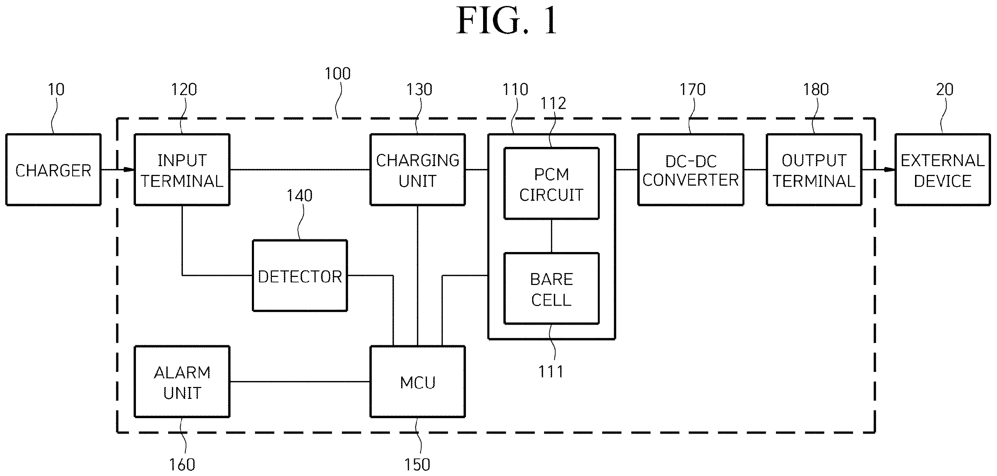

FIG. 1 is a block diagram of an external battery 100 according to one or more embodiments of the present disclosure.

Referring to FIG. 1, the external battery 100 according to one or more embodiments of the present disclosure may include a battery 110, an input terminal 120, a charging unit 130, a detector 140, a main controller unit (MCU) 150, an alarm unit 160, a DC-DC converter 170, and an output terminal 180.

The battery 110 may include a bare cell 111 and a protection circuit module (PCM) circuit 112 which is configured to be electrically connected to the bare cell 111.

The bare cell 111 may be a chargeable/dischargeable battery cell where an electrode assembly having a positive electrode/separator/negative electrode structure is sealed in a battery case and impregnated with a lithium electrolyte. Such an electrode assembly may generally have a jelly-roll structure (a winding type) where a positive electrode and a negative electrode of a long sheet type, where an active material is coated on both surfaces thereof, are round wound with a separator therebetween, or a stacking (stack-type) structure where a plurality of positive electrodes and negative electrodes each having a certain size, where an active material is coated on both surfaces thereof, are sequentially stacked with a separator therebetween.

The bare cell 111 may use all of a cylindrical bare cell or an angular bare cell, where an electrode assembly is embedded in a battery case of a metal can, based on a shape of a battery, and a pouch-type bare cell where an electrode assembly is embedded in a battery case of an aluminum laminate sheet. Also, the bare cell 111 may have a structure where two or more bare cells are connected to one another in series and/or parallel.

The PCM circuit 112 electrically connected to the bare cell 111 may control an overcharging voltage, an over-discharging voltage, and a discharging overcurrent of the bare cell 111 to protect the bare cell 111. The PCM circuit 112 may not be a main element of the present disclosure, and thus, a detailed description thereof is omitted.

The input terminal 120 may be a portion connected to a terminal of a charger 10 and may transfer an external power, supplied from the charger 10, to the charging unit 130. The input terminal 120 may be implemented as various types, based on the kind of charger 10.

The charger 10 may generate a charging current using an external power supplied from the input terminal 120, and then, may supply the charging current to the battery 110 to allow the battery 110 to be charged, or may supply the charging current to an external device 20 to allow the external device 20 to be charged. In one or more embodiments, the charging unit 130 may be implemented as a charging integrated chip (IC). A level of the charging current output from the charging unit 130 may vary based on the specification of the charger 10 connected to the input terminal 120. Accordingly, the MCU 150 may sense a voltage flowing in the input terminal 120 to determine the specification of the charger 10 and may control the charging unit 130 so that the charging current based on the specification of the charger 10 is output from the charging unit 130.

The detector 140 may sense a voltage state of the input terminal 120 and may determine a current value of the charging current supplied to the battery 110, based on the voltage state. In one or more embodiments, the detector 140 may sense a voltage state between a D+ terminal and a D- terminal of a universal serial bus (USB) cable connected to the input terminal 120 to check the degree to which the charging current flows. For example, when the voltage state of the input terminal 120 is an open state, the detector 140 may determine the current value of the charging current to be 500 mA, and when the voltage state of the input terminal 120 is a short circuit state, the detector 140 may determine the current value of the charging current to be 1 A. Also, when the voltage state of the input terminal 120 is a pull-up state, the detector 140 may determine the current value of the charging current to be 2 A. The amount of charging of the battery 110 may be determined based on the current value of the charging current detected by the detector 140.

Moreover, the MCU 150 may determine whether the charger 10 is connected or not connected, based on a voltage sensed by the detector 140. Also, the MCU 150 may sense a voltage flowing in the input terminal 120 to determine the specification of the charger 10 and may control the charging unit 130 so that a charging current based on the specification of the charger 10 is output from the charging unit 130.

The MCU 150 may overall control a configuration of the external battery 100, perform control so that the battery 110 is charged by the charging current, calculate an estimated full charging time taken for full charging of the battery 110, based on the current value of the charging current, and calculate a charging time for which the charging current flows. The MCU 150 may calculate an estimated full charging time for which the battery 110 is fully charged with the current value of the charging current, based on a capacity of the battery 110. Also, after the external battery 100 is connected to the charger 10, the MCU 150 may calculate a charging time for which the battery 110 is actually charged. In embodiments, the MCU 150 may include a counter which generates a clock pulse, and the MCU 150 may count clock pulses generated when the charging current is flowing and may thus calculate a charging time. Subsequently, the MCU 150 may compare the charging time with the estimated full charging time, and when the actual charging time is longer than the estimated full charging time, the MCU 150 may determine that an error has occurred in internal hardware (H/W) of the external battery 100 such as the charging unit 130. Accordingly, when the charging time of the battery 110 is longer than the estimated full charging time, the MCU 150 may cut off the charging current.

When the charging time is longer than the estimated full charging time, the alarm unit 160 may issue an alarm (e.g., to a user). In embodiments, the alarm unit 160 may include a display unit which displays an alarm message or a speaker which outputs an alarm sound, when the charging time of the battery 110 is longer than the estimated full charging time. The display unit may display a balance of the battery 110, in addition to displaying the alarm message.

The DC-DC converter 170 may convert a voltage, output from the battery 110, into a voltage having a level for charging (e.g., a charging voltage) of the external device 20 to transfer to the output terminal 180.

The output terminal 180 may be connected to the external device 20 and may transfer electrical energy, supplied from the battery 110, to the external device 20. A shape of the output terminal 180 may be varied, based on the kind of external device 20.

Here, the external device 20 may include all devices driven by a battery embedded therein, such as personal digital assistants (PDA), portable phones, and notebook computers. For example, the external device 20 may include devices of various types which are driven with electrical energy supplied from the external battery 100, or charge a battery included in the external device 20 by using the electrical energy supplied from the external battery 100. Hereinafter, for convenience of description, an example where charging of the external device 20 denotes an operation of charging the battery embedded in the external device 20 will be described.

According to embodiments of the present disclosure, a voltage state of the input terminal 120 of the external battery 100 may be sensed, a current value of a charging current may be determined based on the voltage state, and an estimated full charging time taken for full charging of the battery 110 may be calculated based on the current value of the charging current, and thus, a time taken for fully charging the battery 110 may be accurately predicted.

According to embodiments of the present disclosure, when a charging time of the external battery 100 is longer than an estimated full charging time, this may be provided to a user, and thus, an after-sale service (A/S) for solving a problem occurring in the external battery 100 may be quickly provided to the user.

According to embodiments of the present disclosure, when a charging time of the external battery 100 is longer than an estimated full charging time, a charging current may be cut off, and thus, the occurrence of a stability problem such as fire or swelling of the battery 110 may be prevented.

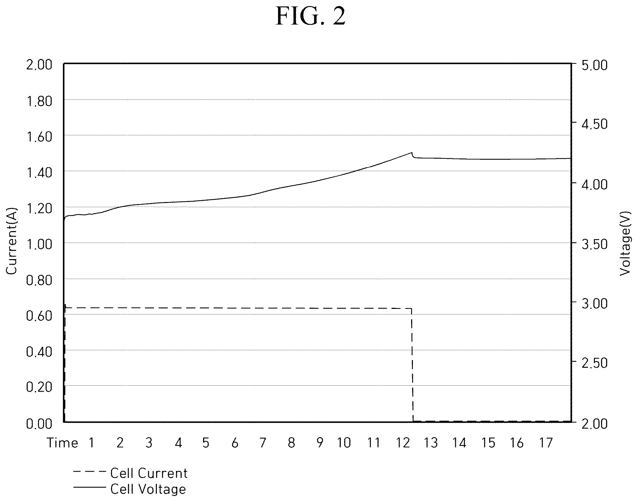

FIG. 2 is a graph showing a volage variation and a current variation when charging is controlled by an external battery according to embodiments of the present disclosure.

Referring to FIG. 2, when the charger 11 is connected to the input terminal 120 of the external battery 100 according to one or more embodiments of the present disclosure and charging starts, a constant charging current may flow as in a graph of a lower portion. Accordingly, the battery 110 of the external battery 100 may be charged with the charging current, and moreover, a voltage of the battery 110 may increase. In FIG. 2, an estimated full charging time calculated by the MCU 150 may be 12 hours, and as a charging time of the battery 110 reaches 12 hours, the MCU 150 may cut off a charging current, whereby a current value of the charging current may be 0 and a voltage of the battery 110 may no longer increase.

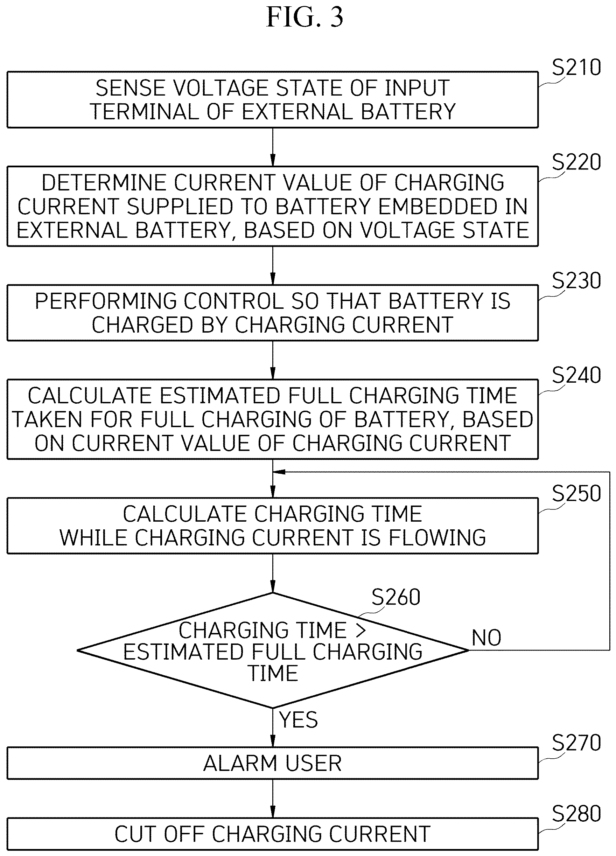

FIG. 3 is a flowchart for describing a method of charging an external battery, according to embodiments of the present disclosure.

As illustrated in FIG. 3, the method of charging the external battery according to embodiments of the present disclosure may include steps S210 to S280.

Step S210 may be a step of sensing a voltage state of an input terminal of the external battery. In embodiments, step S210 may include a step of sensing a voltage state between a D+ terminal and a D- terminal of a USB cable connected to the input terminal.

Step S220 may be a step of determining a current value of a charging current supplied to a battery embedded in the external battery, based on the voltage state. In embodiments, step S220 may include a step of determining the current value of the charging current to be 500 mA when the voltage state of the input terminal is an open state and a step of determining the current value of the charging current to be 1 A when the voltage state of the input terminal is a short circuit state, or determining the current value of the charging current to be 2 A when the voltage state of the input terminal is a pull-up state.

Step S230 may be a step of performing control so that the battery is charged by the charging current (in other words, controlling battery charging).

Step S240 may be a step of calculating an estimated full charging time taken for full charging of the battery, based on the current value of the charging current.

Step S250 may be a step of calculating a charging time while the charging current is flowing. In embodiments, step S250 may include a step of calculating a charging time by counting clock pulses generated when the charging current is flowing.

Step S260 may be a step of checking whether the charging time is longer than the estimated full charging time. When the charging time is longer than the estimated full charging time, step S270 may be performed, and when the charging time does not exceed the estimated full charging time, the method may return to step S250 and may continuously calculate a charging time.

Step S270 may be a step of alarming a user when the charging time is longer than the estimated full charging time. In embodiments, step S270 may include a step of displaying an alarm message through a display unit, or a step of outputting an alarm sound through a speaker.

Step S280 may be a step of cutting off the charging current when the charging time is longer than the estimated full charging time.

Hereinabove, the method of charging an external battery according to embodiments of the present disclosure has been described with reference to the flowchart illustrated in the drawing. To provide a simple description, the method is illustrated as a series of blocks and has been described, but the present disclosure is not limited to the order of the blocks and some blocks may be provided simultaneously or in order which differs from the illustration and description of the present disclosure, or the order of blocks, a flow path, and various other branches for accomplishing the same or similar result may be implemented. Also, all blocks illustrated for implementing a method described herein may not be needed.

Furthermore, in the description given above with reference to FIG. 3, based on an implementation example of the present disclosure, each step may be further divided into additional steps, or may be combined into fewer steps. Also, some steps may be omitted depending on the case, or the order between steps may be changed. Furthermore, despite the other omitted descriptions, the descriptions of FIGS. 1 and 2 may be applied to the description of FIG. 3. Also, the description of FIG. 3 may be applied to the descriptions of FIGS. 1 and 2.

Electronic devices (for example, notebook computers, portable phones, personal digital assistant (PDA), etc.), which are recently used, have been developed to be portable in use. Such portable electronic devices are supplied with electrical energy used for use by using a battery mainly. Recently, portable electronic devices have additional functions added thereto as well as a unique function, and moreover, are being diversified in function so that various functions are performed with only one portable electronic device. Therefore, electrical energy needed for use is progressively increasing also, and due to this, a basic battery having a larger capacity is required.

To this end, external batteries which are portable without being used and attached to portable electronic devices have been developed. In external batteries, users may generally check a charging state in the middle of charging, but there are many cases where an external battery is left in a charged state without performing charging while storing a time taken for full charging. Therefore, in a case where external batteries are continuously charged without stopping charging despite the occurrence of an internal problem, stability problems such as fire and swelling of external batteries may occur.

According to embodiments of the present disclosure, a voltage state of an input terminal of an external battery may be sensed, a current value of a charging current may be determined based on the voltage state, and an estimated full charging time taken for full charging of the battery may be calculated based on the current value of the charging current, and thus, a time taken for fully charging the battery may be accurately predicted.

According to embodiments of the present disclosure, when a charging time of an external battery is longer than an estimated full charging time, this may be provided to a user, and thus, an after-sale service (A/S) for solving a problem occurring in the external battery may be quickly provided to the user.

According to embodiments of the present disclosure, when a charging time of an external battery is longer than an estimated full charging time, a charging current may be cut off, and thus, the occurrence of a stability problem such as fire or swelling of the battery may be prevented.

An aspect of the present disclosure is directed to providing an external battery and a method of charging the same, which may prevent an abnormal operation of a charging integrated chip (IC) and may prevent overcharging.

However, the technical problem to be solved by the present disclosure is not limited to the above problem(s), and other problems not mentioned herein.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. An external battery (100), comprising:
a battery (110) cell;
a charging unit (130) configured to generate a charging current with an external power supplied from a charger (10, 11) to an input terminal (120) thereof and to transfer the charging current to the battery (110) cell;
a detector (140) configured to sense a voltage state of the input terminal (120) and determine a current value of the charging current supplied to the battery (110) cell, based on the voltage state; and
a main controller unit, MCU, (150) configured to control charging of the battery (110) cell by the charging current, calculate an estimated full charging time for fully charging the battery (110) cell, based on a current value of the charging current, and calculate a charging time while the charging current is flowing.

2. The external battery (100) as claimed in claim 1, further comprising an alarm unit (160) configured to alarm a user when the charging time is longer than the estimated full charging time.

3. The external battery (100) as claimed in claim 2, wherein the alarm unit (160) comprises a display unit configured to display an alarm message when the charging time is longer than the estimated full charging time and/or wherein the alarm unit (160) comprises a speaker configured to output an alarm sound when the charging time is longer than the estimated full charging time.

4. The external battery (100) as claimed in claims 1 to 3, wherein, when the charging time is longer than the estimated full charging time, the MCU (150) cuts off the charging current.

5. The external battery (100) as claimed in claims 1 to 4, wherein, when the voltage state of the input terminal (120) is an open state, the detector (140) determines the current value of the charging current to be 500 mA.

6. The external battery (100) as claimed in claims 1 to 5, wherein, when the voltage state of the input terminal (120) is a short circuit (112) state, the detector (140) determines the current value of the charging current to be 1 A and/or wherein, when the voltage state of the input terminal (120) is a pull-up state, the detector (140) determines the current value of the charging current to be 2 A.

7. The external battery (100) as claimed in claims 1 to 6, wherein the MCU (150) comprises a counter configured to generate a clock pulse, and the MCU (150) calculates the charging time by counting clock pulses generated when the charging current is flowing.

8. The external battery (100) as claimed in claims 1 to 7, wherein the detector (140) senses a voltage state between a D+ terminal and a D- terminal of a universal serial bus, USB, cable connected to the input terminal (120).

9. A method of charging an external battery (100), the method comprising:
sensing a voltage state of an input terminal (120) of an external battery (100);
determining a current value of a charging current supplied to a battery (110) cell embedded in the external battery (100), based on the voltage state;
controlling the battery (110) cell to be charged by the charging current;
calculating an estimated full charging time for fully charging the battery (110) cell, based on a current value of the charging current; and
calculating a charging time while the charging current is flowing.

10. The method as claimed in claim 9, further comprising alarming a user when the charging time is longer than the estimated full charging time.

11. The method as claimed in claim 10, wherein alarming comprises displaying an alarm message through a display unit when the charging time is longer than the estimated full charging time and/or wherein alarming comprises outputting an alarm sound through a speaker when the charging time is longer than the estimated full charging time.

12. The method as claimed in claims 9 to 11, further comprising cutting off the charging current when the charging time is longer than the estimated full charging time.

13. The method as claimed in claims 9 to 12, wherein determining the current value of the charging current comprises determining the current value of the charging current to be 500 mA when the voltage state of the input terminal (120) is an open state.

14. The method as claimed in claims 9 to 13, wherein determining the current value of the charging current comprises determining the current value of the charging current to be 1 A when the voltage state of the input terminal (120) is a short circuit (112) state and/or wherein determining the current value of the charging current comprises determining the current value of the charging current to be 2 A when the voltage state of the input terminal (120) is a pull-up state.

15. The method as claimed in claims 9 to 14, wherein calculating the charging time comprises calculating the charging time by counting clock pulses generated when the charging current is flowing, using a counter generating a clock pulse.
